# EUROPEAN PATENT SPECIFICATION

(11) **EP 1 526 922 B1**
(45) Date of publication and mention of the grant of the patent: **10.10.2007**
(21) Application number: 03766561.9
(22) Date of filing: 21.07.2003
(51) Int. Cl.: B05D 5/08, B26B 19/38, C09D 183/08, B05D 1/02

(54) **PERSONAL CARE APPLIANCE AND USE OF A SOL GEL COATING ON SUCH AN APPLIANCE**
HYGIENE UTENSIL UND VERWENDUNG EINER SOL-GEL-BESCHICHTUNG AUF SOLCH EINEM UTENSIL
USTENSILE D'HYGIÈNE PERSONNELLE ET UTILISATION D'UN FILM SOL GEL SUR CET USTENSILE

(30) Priority: 30.07.2002 EP 02078129
(43) Date of publication of application: 04.05.2005
(73) Proprietor: Koninklijke Philips Electronics N.V., 5621 BA Eindhoven (NL)
(72) Inventor: WIELSTRA, Ytsen, NL-5656 AA Eindhoven (NL); WINKEL, Jolanda, H., S., NL-5656 AA Eindhoven (NL); BRUGGINK, Wilhelmus, H., M., NL-5656 AA Eindhoven (NL)
(74) Representative: van Wermeskerken, Stephanie Christine
(86) International application number: PCT/IB2003/003286
(87) International publication number: WO 2004/012876

(56) References cited:
- WO-A-98/13434
- WO-A-98/40323
- DE-U- 29 923 595
- GB-A- 1 393 488
- US-A1- 2001 053 412
- US-B1- 6 273 348
- PATENT ABSTRACTS OF JAPAN vol. 017, no. 475 (C-1103), 30 August 1993 (1993-08-30) & JP 05 116989 A (MURAKAMI KAIMEIDOU:KK;OTHERS: 01), 14 May 1993 (1993-05-14)

## Description

The invention relates to a utensil which is provided with a sol gel coating comprising an organosilane compound. The invention also relates to the use of such a sol gel coating on a utensil.

As the chemical resistance of sol gel based coatings is superior to regular decorative coatings based on organic material, sol gel coatings are usually very well suited to serve as coatings that are exposed to cosmetic formulations, such as lotions and shampoos. For example, in WO 98/13434 such a sol gel coating is described, wherein said sol gel coating contains a network of a hydrolytically condensed organosilane compound.

The surface tension of such coatings varies between 30 and 50 mN/m. Application of liquids, like cosmetic formulations in personal care appliances, will generally lead to an easy spreading of the liquid on the coated surfaces if the surface tension of the liquid is lower than the surface tension of the surface. Such adhesive spreading leads to a comparatively difficult cleaning, especially if the personal care appliance is not cleaned immediately after use. Difficulties in cleaning said appliances are undesirable from a hygienic, aesthetic, and practical point of view. If the surface tension of the liquid is higher than the surface tension of the surface of an appliance, no spreading of the liquid will take place and an easy cleaning will be possible.

The surface tension of cosmetic formulations may vary strongly, depending on the ingredients used. In particular the presence of surfactants is a determining factor for the surface tension of the cosmetic formulation. When surfactants are used, surface tensions as low as 20-22 mN/m can be achieved. It is therefore obvious that such liquids will spread easily on materials, such as coatings and plastics normally used in personal care appliances.

The documents PATENT ABSTRACTS OF JAPAN vol. 017, no. 475 (C-1103), 30 August 1993 (1993-08-30) & JP 05 116989 A, US-B1-6 273 348 and US 2001/053412 A1 describe the application of a coating comprising an organosilane compound with an non-hydrolysable fluorine to a substrate by the sol-gel method.

It is an object of the invention to provide a personal care appliance provided with an improved sol gel coating that prevents an easy spreading of a liquid.

This object is achieved by a personal care appliance as mentioned in the opening paragraph characterized in that the organosilane compound is fluorinated, such that the bonded fluorine is non-hydrolyzable. The use of such a fluorinated organosilane compound according to the invention leads to a sol gel coating with a low surface tension (approximately between 20 and 21 Nm/m), which results in a relatively strong hydrophobic character. As a result the sol gel coating is relatively easy to clean by simple rinsing, for example under tap water. Utensils according to the invention may be, for example, containers for liquids such as shampoo, lotions, and perfumes, but also other appliances which are adapted for holding lotions and/or being cleaned with water, such as electric, wet-shaving appliances (for example the Philips Coolskin^{®}).

The fluorinated organosilane compound preferably comprises at least one fluorinated alkyl group. The fluorinated alkyl group is thereby provided with one or more non-hydrolyzable fluorine atoms. The length and spatial arrangement of the alkyl group is not restricted to a single embodiment, but may vary considerably. Preferably, tridecafluoro, 1,1,2,2,tetrahydrooctyltriethoxysilane is used within a sol gel coating according to the invention. Tridecafluoro, 1,1,2,2,tetrahydrooctyltriethoxysilane can be visualized in the following chemical structure:

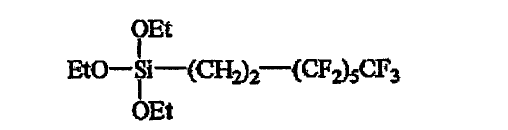

The ethoxy groups are hydrolyzable, resulting in alcohol and a reactive intermediate that can be easily condensed with other silanes forming Si-O-Si bonds. The resulting network has a high resistance to a great variety of compounds such as, for example, those in lotions for personal care, is highly hydrophobic, and easy to clean. Although all kinds of fluorinated substances in principle can achieve the object of the invention, preferably a fluorinated organosilane compound is applied containing at least one alkoxy group. In this way the fluorinated compound is built into the network, which prevents a leaching out of the fluorinated compound. Incorporation of fluorinated compounds into regular organic lacquers will also result in a highly hydrophobic character, but such coatings lack the chemical and mechanical resistance of sol gel based coatings.

The invention also relates to the use of a coating with a fluorinated organosilane compound on a personal care appliance.

The invention is further illustrated in the following non-restrictive examples.

### Example 1

0.6 g maleic acid was added to a mixture of 19.8 g 3-glycidyloxypropyltrimethoxysilane, 8.6 g tetraethoxysilane, 1.5 g tridecafluoro-1,1,2,2 tetra hydro-octyl triethoxysilane and 27 g ethanol. After dissolution of the acid, 44 g Ludox AS-40 (40% silica dispersion, DuPont) was added under stirring. After 45 minutes a mixture of 10.3 g Zr(OPr)4 (70% in propanol) and 2.2 g ethylacetoacetate was added. The resulting lacquer was sprayed on a nylon substrate and cured at 160 °C for 20 minutes. The surface tension was found to be 20.6 mN/m.

### Example 2

In a comparative example no fluorinated silane was used, resulting in a surface with a surface tension of 42 mN/m.

Rinsing of the coating with acetone (23.7 mN/m) or ethanol (22.3 mN/m), which resulted in poor wetting in both cases, readily demonstrated the low surface tension of the fluorinated sample. Perfect wetting took place with the non-fluorinated sample.

Coated samples were covered with shaving emulsion (for example as used in the Philips Cool Skin shaver) and dried in the air for one week. The semisolid residue could be easily removed by rinsing with tap water in the case of the fluorinated sample. In the comparative non-fluorinated sample, cleaning was difficult and required hot tap water for prolonged times.

## Claims

1. A personal care appliance, such as an electric shaver, which is at least partly provided with a sol gel coating comprising an organosilane compound, **characterized in that** the organosilane compound is fluorinated, such that the bonded fluorine is non-hydrolyzable.

2. A personal care appliance as claimed in claim 1, **characterized in that** the fluorinated organosilane compound comprises at least one fluorinated alkyl group.

3. A personal care appliance as claimed in one of the foregoing claims, **characterized in that** the organosilane compound comprises at least one alkoxy group.

4. A personal care appliance according to any one of the claims 1-3, **characterised in that** the personal care appliance is an electric shaver adapted for holding a lotion or a shaving emulsion.

5. Use of a sol gel coating comprising a fluorinated organosilane compound, such that the bonded fluorine is non-hydrolyzable, on a personal care appliance adapted for holding a lotion or a shaving emulsion.

6. Method for manufacturing a personal care appliance comprising the step:
- providing a sol gel coating comprising a fluorinated organosilane compound, such that the bonded fluorine is non-hydrolyzable, on a substrate.

## Patentansprüche

1. Vorrichtung für die Körperpflege, wie ein Elektrorasierer, die zumindest teilweise mit einer Sol-Gel-Beschichtung versehen ist, die eine Organosilanverbindung umfasst, **dadurch gekennzeichnet, dass** die Organosilanverbindung fluoriert ist, so dass das gebundene Fluor nicht hydrolysierbar ist.

2. Vorrichtung für die Körperpflege nach Anspruch 1, **dadurch gekennzeichnet, dass** die fluorierte Organosilanverbindung mindestens eine fluorierte Alkylgruppe umfasst.

3. Vorrichtung für die Körperpflege nach einem der vorhergehenden Ansprüche, **dadurch gekennzeichnet, dass** die Organosilanverbindung mindestens eine Alkoxygruppe umfasst.

4. Vorrichtung für die Körperpflege nach einem der Ansprüche 1 - 3, **dadurch gekennzeichnet, dass** die Vorrichtung für die Körperpflege ein Elektrorasierer ist, der dafür eingerichtet ist, eine Lotion oder eine Rasieremulsion zu enthalten.

5. Verwendung einer Sol-Gel-Beschichtung, die eine fluorierte Organosilanverbindung umfasst, so dass das gebundene Fluor nicht hydrolysierbar ist, auf einer Vorrichtung für die Körperpflege, die dafür eingerichtet ist, eine Lotion oder eine Rasieremulsion zu enthalten.

6. Verfahren zum Herstellen einer Vorrichtung für die Körperpflege, das den folgenden Schritt umfasst:
- Bereitstellen einer Sol-Gel-Beschichtung auf einem Substrat, die eine fluorierte Organosilanverbindung umfasst, so dass das gebundene Fluor nicht hydrolysierbar ist.

## Revendications

1. Ustensile d'hygiène corporelle, tel qu'un rasoir électrique, qui est au moins partiellement pourvu d'un film de sol-gel comprenant un composé d'organosilane, **caractérisé en ce que** le composé d'organosilane est fluoré de telle façon que le fluor lié est non hydrolysable.

2. Ustensile d'hygiène corporelle selon la revendication 1, **caractérisé en ce que** le composé d'organosilane fluoré comprend au moins un groupe d'alkyle fluoré.

3. Ustensile d'hygiène corporelle selon l'une quelconque des revendications précédentes, **caractérisé en ce que** le composé d'organosilane comprend au moins un groupe d'alcoxy.

4. Ustensile d'hygiène corporelle selon l'une quelconque des revendications précédentes 1 à 3, **caractérisé en ce que** l'ustensile d'hygiène corporelle est un rasoir électrique qui est adapté à contenir une lotion ou une émulsion de rasage.

5. Utilisation d'un film de sol-gel comprenant un composé d'organosilane fluoré te telle façon que le fluor lié est non hydrolysable, sur un ustensile d'hygiène corporelle qui est adapté à contenir une lotion ou une émulsion de rasage.

6. Procédé de fabrication d'un ustensile d'hygiène corporelle comprenant l'étape consistant à:
- fournir un film de sol-gel comprenant un composé d'organosilane fluoré de telle façon que le fluor lié est non hydrolysable, sur un substrat.
